(19) Europäisches Patentamt
European Patent Office
Office européen des brevets

(11) **EP 3 390 106 B1**

(12) **EUROPEAN PATENT SPECIFICATION**

(45) Date of publication and mention
of the grant of the patent:
**23.09.2020 Bulletin 2020/39**

(21) Application number: **16819253.2**

(22) Date of filing: **12.12.2016**

(51) Int Cl.:
***B60C 9/28*** *(2006.01)* ***B60C 9/20*** *(2006.01)*

(86) International application number:
**PCT/US2016/066063**

(87) International publication number:
**WO 2017/106063 (22.06.2017 Gazette 2017/25)**

(54) **TIRE WITH IMPROVED CROWN PORTION REINFORCEMENT**

REIFEN MIT VERBESSERTER WULSTVERSTÄRKUNG

PNEU COMPRENANT UN RENFORT DE PARTIE DE SOMMET AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2015 PCT/US2015/065968**

(43) Date of publication of application:
**24.10.2018 Bulletin 2018/43**

(73) Proprietor: **Compagnie Générale des
Etablissements Michelin
63000 Clermont-Ferrand (FR)**

(72) Inventors:
• **CLAYTON, William, Bennett
Greenville
South Carolina 29605 (US)**

• **HICKS, Daniel, McEachern
Greenville
South Carolina 29605 (US)**

(74) Representative: **Casalonga
Casalonga & Partners
Bayerstraße 71/73
80335 München (DE)**

(56) References cited:
DE-A1-102013 107 475    GB-A- 2 108 439
JP-A- 2008 201 147    US-A- 4 263 956
US-A1- 2011 308 686    US-B1- 6 367 527

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### PRIORITY STATEMENT

The present application claims priority under 35 U.S.C. § 119 to PCT/US15/065968, filed December 16, 2015.

### FIELD OF THE INVENTION

The present invention relates to a tire having unique reinforcements in the crown portion.

### BACKGROUND OF THE INVENTION

The resistance of a tire to road hazards is an important aspect of time performance along with characteristics such as rolling resistance, traction, wear, and others. As used herein, road hazard performance refers to the tire's ability to impact an obstacle in the roadway without suffering critical structural damage along the crown portion of the tire. For example, during operation, the tire might encounter a rock, hole, or other hazard with potential to damage reinforcements in the crown portion of the tire.

One well-known test for road hazard performance is referred to as the breaking energy test (BE test) that is set forth by the United States Government as FMVSS 119 or DOT 119. In this test, a steel plunger is forced perpendicular to the tread of a mounted and inflated tire until the tire either ruptures (with the resulting air loss) or the plunger is stopped by reaching the rim. The plunger penetration distance and the force test points are then used to calculate a breaking energy that must exceed the required "minimum breaking energy" set by e.g., a governing or regulatory body. As such, the BE test is intended to measure the ability of the tire to absorb the energy associated with a road hazard impact.

Conventionally, various alternatives are available to improve a tire's road hazard performance. For example, one or more reinforcement layers can be added to the crown portion of the tire. The strength of cables in the reinforcement layers can be increased. The pace (i.e. spacing between) of the reinforcement cables in the reinforcement layers can be decreased. Typically, these potential solutions add considerable penalties in cost, mass, and/or rolling resistance of the tire.

JP2008 201147 relates to a tire with certain belts in the crown portion.

Accordingly, a tire that can provide resistance to road hazards would be useful. More particularly, a tire than can provide resistance to road hazards while avoiding penalties in e.g., mass, cost, and or rolling resistance associated with conventional solutions would be particularly beneficial.

## SUMMARY OF THE INVENTION

The present invention relates to a tire that provides increased resistance to road hazards without incurring significant penalties in mass, cost, or rolling resistance. A least one ply, referred to herein as a "breaker ply," is positioned radially outward of a body ply and includes reinforcements positioned at particular angle relative to the circumferential direction C or the equatorial plane EP of the tire. The width, W, of the breaking ply can be minimized based on the angle of its reinforcements so as to help reduce the mass, cost, and rolling resistance of the tire. Additional objects and advantages of the invention will be set forth in part in the following description, or may be apparent from the description, or may be learned through practice of the invention.

In one exemplary embodiment of the present invention, the present invention provides a tire defining axial, circumferential, and radial directions. The tire defines an equatorial plane. The tire includes a pair of opposing bead portions, a pair of opposing sidewall portions, wherein each sidewall portion is configured for connection to a rim of a wheel with a bead portion. A crown portion is connected between opposing sidewall portions. A body ply extends between the bead portions and through the opposing sidewall portions and crown portion.

A breaker ply is positioned in the crown portion and radially outward of the body ply. A first working ply is positioned in the crown portion and radially outward of the breaker ply. A second working ply is positioned in the crown portion and radially outward of the first working ply.

The breaker ply includes a plurality of breaker ply reinforcement elements having a length of no more than 155 mm, at an angle $\theta$ from the equatorial plane, wherein the range of $\theta$ is $5° \leq \theta \leq 60°$.

The tire may include a layer of circumferential reinforcement elements positioned in the crown layer.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates a schematic, cross-sectional view of an exemplary embodiment of the present invention.
FIG. 2 is a schematic illustration depicting the relative angles of reinforcements in various layers or plies of an exemplary embodiment the present invention.

FIG. 3 is a schematic illustration depicting the relative angles of reinforcements in various layers or plies where the breaking ply has reinforcements positioned at 90 degrees from the equatorial plane.

FIG. 4 illustrates a schematic, cross-sectional view of another exemplary embodiment of the present invention.

FIGS. 5 through 8 illustrate plots of various experimental data as more fully described herein.

## DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

As stated above, a tire's resistance to impact with road hazards can be measured using a breaking energy (BE) test such as FMVSS 119 or DOT 119, which are well known and published. One aspect of the inventors' present discovery is that the mass of reinforcements used in the crown portion of a tire can be reduced while actually improving the tire's resistance to road hazard performance. This discovery contradicts conventional methods whereby the mass of the tire is increased by adding belts to the tire, decreasing the pace (e.g., increasing the density) of cord reinforcements, and similar approaches that undesirably increase the rolling resistance and manufacturing cost of the tire.

As used herein:

Cords are "inextensible" when such cords have, under a tensile force equal to 10% of their breaking strength, a relative elongation of at most 0.2%.

"Pace" refers to the distance A between adjacent reinforcement elements in the layer of the reinforcing ply.

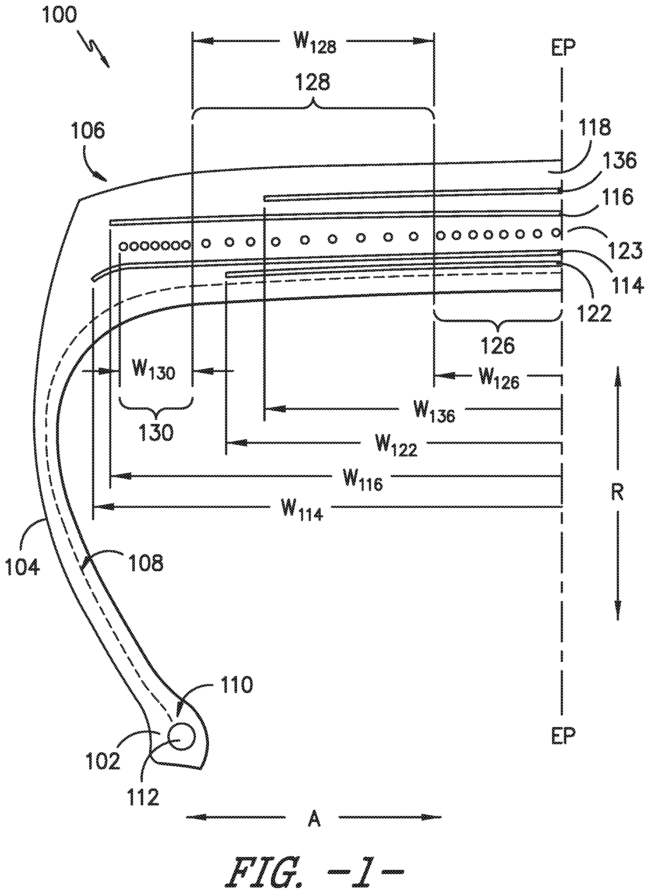

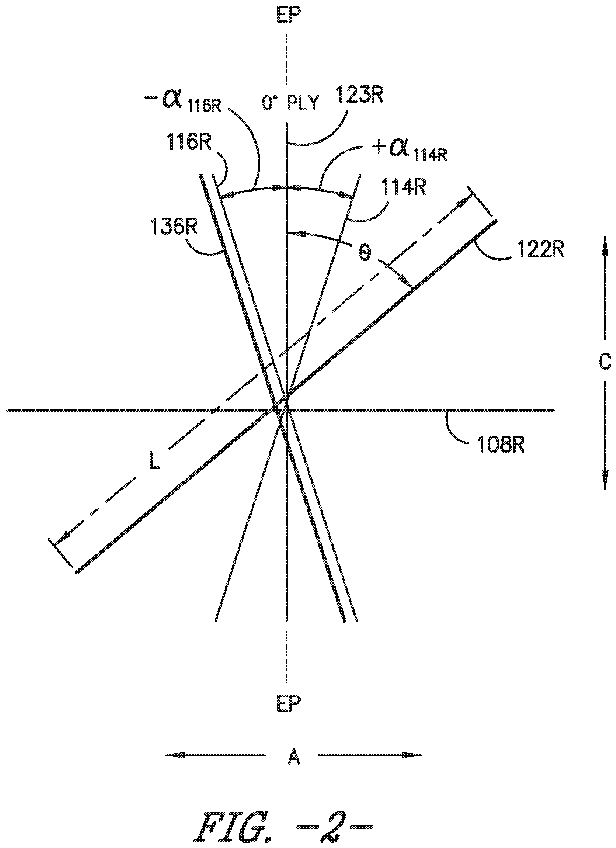

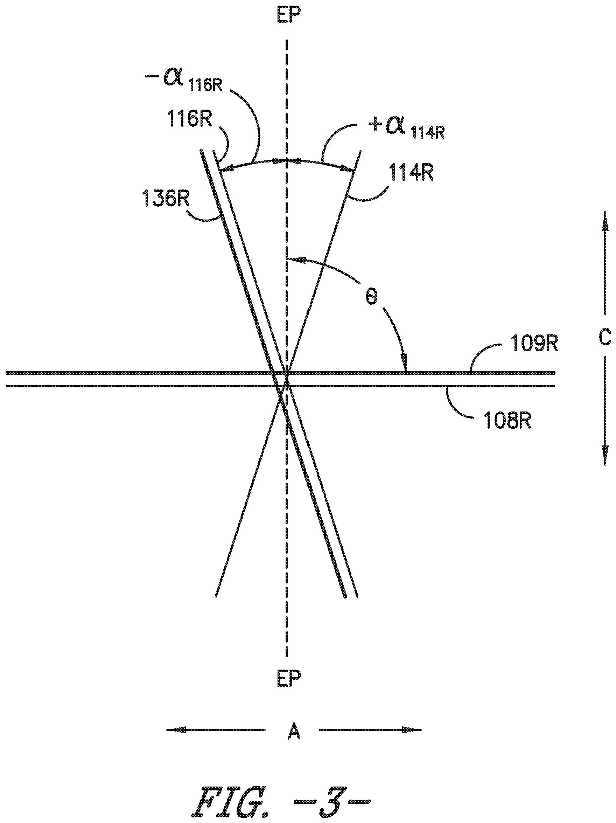

FIG. 1 is a schematic illustration of a tire 100 of the present invention. Tire 100 is shown in a cross-section taken along a meridian plane of the tire. The meridian plane includes the axis of rotation, which is parallel to axial direction A and about which tire 100 rotates during use. Radial direction R is orthogonal to axial direction A. As used herein, "radially-outward' refers to a radial direction away from the axis of rotation while "radially-inward" refers to a radial direction towards the axis of rotation. Circumferential direction C (FIGS. 2 and 3) is orthogonal to both radial direction R and axial direction A at any given point about the circumference of the tire, corresponds with the periphery of the tire, and is defined by the direction of rotation of the tire about the axis of rotation.

Tire 100 is symmetrical about the equatorial plane EP and, therefore, bisects tire 100 into opposing halves of substantially the same construction for which FIG. 1 depicts only one of the opposing halves. Accordingly, tire 100 includes a pair of opposing bead portions 102 and a pair of opposing sidewall portions 104 where only one of each pair is shown in FIG. 1 as will be readily understood by one of ordinary skill in the art. Tire 100 also includes a crown portion 106 connected to each opposing sidewall portion 104 and extending therebetween. A tread layer 118 forms the radially outermost portion of crown portion 106.

Referring to FIGS. 1 and 2, a body ply 108 extends from each bead portion 102, through each sidewall portion 104, and through the crown portion 106. As used herein, the term "ply" or "plies" refers to a layer or reinforcement of the tire and is not limited to a particular method of manufacturing a tire or the ply itself. For this particular embodiment, body ply 108 is of a radial reinforcement type meaning that it includes one or more reinforcing cords 108R (FIG. 2) that are parallel to each other and oriented at an angle of $\pm$ 9 degrees or less from radial direction R along the sidewall portions 104 in the region of ends 110. Cords 108R are inextensible and may be constructed from e.g., a metal element or other inextensible materials. Each end 110 of body ply 108 is anchored in a respective bead portion 102. In certain embodiments, body ply 108 may be wrapped around a respective bead core 112 though such is not required.

Tire 100 includes a first working ply 114 and a second working ply 116, where second working ply 116 is positioned radially outward of first working ply 114. For this embodiment, first working ply 114 includes a plurality of first working ply reinforcements 114R that are parallel to each other within ply 114. Similarly, second working ply 116 includes a plurality of second working ply reinforcements 116R that are parallel to each other within ply 116.

FIG. 2 schematically depicts the relative orientation of reinforcements in various plies of tire 100 using only a single reinforcement for each ply for purposes of illustration. As shown, the first working ply reinforcements 114R and second working ply reinforcements 116R are crossed with respect to each other. More particularly, reinforcements 114R and 116R form an angle $+\alpha_{114R}$ and $-\alpha_{116R}$, respectively, from the equatorial plane. In a typical left hand drive market, $+\alpha_{114R}$ has a positive value as shown in FIG. 2 while $-\alpha_{116R}$ has a negative value as shown in FIG 2. In a right hand drive market, this orientation may be reversed such that $\alpha_{114R}$ has a negative value while $\alpha_{116R}$ has a positive value. The orientation of other reinforcements would be changed similarly between left hand and right hand drive markets. The use of negative angle designations for $\alpha$ denotes the orientation of the reinforcements relative to the equatorial plane as viewed from a perspective looking radially inward on the tire.

In one exemplary embodiment, the range of $\alpha$ is $10° \leq |\alpha_{114R}| \leq 45°$ for first working ply reinforcements 114R and is $10° \leq |\alpha_{116R}| \leq 45°$ for second working ply reinforcements 116R. First working ply 114 and second working ply 116 are both positioned radially outward of body 108 along crown portion 106.

In one particular embodiment, first working ply reinforcements 114R of first working ply 114 are constructed as inextensible 9.26 metal cords, wherein each cord includes 9 metal wires with each wire being 0.26 mm in diameter. For this embodiment, second working ply reinforcements 116R of second working ply 116 are also constructed as inextensible 9.26 metal cords, wherein each cord includes 9 metal wires with each wire being 0.26 mm in diameter. Other constructions may be used as well.

In certain embodiments of the invention, working ply 114 and working ply 116 have different widths along axial direction A. For example, the difference in widths along the axial direction may be the range of 10 mm to 30 mm. In certain embodiments, the first working ply 114 has the narrower axial width, $W_{114}$, as compared to the axial width, $W_{116}$ of second working ply 116. In one particular embodiment, tire 100 includes a first working ply 114 having an axial width $W_{114}$ of 366 mm and a second working ply 116 having an axial width $W_{116}$ of 344 mm.

Tire 100 includes a breaker ply 122 positioned radially outward of body ply 108 but radially inward of all other plies in crown portion 106. Breaker ply 122 has an axial width $W_{122}$, which is the width of breaker ply 122 along axial direction A. Breaker ply 122 includes a plurality of breaker ply reinforcement elements 122R (FIG. 2) arranged along a layer and parallel to each other. Each breaker ply reinforcement element 122R is continuous along its entire length L (FIG. 2) - i.e. is not broken into segments along its length L. Also, the length L of each breaker ply reinforcement element 122R does not exceed 155 mm. More particularly, if removed from tire 100, straightened, and measured along its length, each reinforcement element 122R would have a length $L \leq 155$ mm. In one exemplary embodiment, tire 100 is a size 445/50R22.5. In another embodiment, tire 100 is size 455/55R22.5 tire.

In one exemplary embodiment, each reinforcement element 122R is constructed from an inextensible cord. For example, breaker ply 122 may be constructed from a plurality of unbelted, inextensible 7.26 metal cords 122R, wherein each cord includes 7 metal wires with each wire being 0.26" in diameter. By way of additional example, breaker ply 122 could also be 9.35 (9 wires of 0.35 mm diameter. Other cable sizes and configurations may be used as well.

In addition, each reinforcement element 122R within breaker ply 122 is at an angle $\theta$ from the equatorial plane EP where $\theta$ is $5° \leq |\theta| \leq 60°$. In one particular embodiment, the range of $\theta$ is $35° \leq |\theta| \leq 60°$. In another particular embodiment, the range of $\theta$ is $40° < |\theta| \leq 60°$. In still another particular embodiment, $|\theta|$ is 40 degrees.

By way of contrast, FIG. 3 depicts a conventional construction of a tire where breaker ply 109 includes reinforcements 109R placed at an angle $\theta$ of 90 degrees from the equatorial plane EP. Part of the inventors' discovery is that by using a value of angle $\theta$ that in the range of $5° \leq |\theta| \leq 60°$ for the breaker ply reinforcements 108R, the BE of the tire can be increased. At the same time, as also discovered, surprisingly the axial width W of the breaker ply can be decreased from conventional constructions so as to reduce the overall mass and rolling resistance of the tire.

More particularly, the length L of the breaker ply can be maintained at $L \leq 155$ mm and at angles $5° \leq |\theta| \leq 60°$, which has the effect of maintaining a lower axial width, $W_{122}$, of the breaker ply. Specifically, axial width, $W_{122}$, can be calculated as follows:

$$\text{Eq. 1}$$
$$W_{122} = L * (\sin(\theta))$$

Substituting that $L \leq 155$ mm for breaker ply reinforcements 122R, the relationship becomes as follows:

$$\text{Eq. 2}$$
$$W_{122} \leq 155 * (\sin(\theta))$$

Returning to FIGS. 1 and 2, in certain exemplary embodiments, tire 100 includes additional layers as well. For the embodiment shown, tire 100 includes a circumferential reinforcement layer 123 constructed from a plurality of circumferential reinforcement elements 123R (FIG. 2) positioned within crown portion 106. In FIG. 1, layer 123 is shown at a location along radial direction R that is between first working ply 114 and second working ply 116. In other embodiments of the invention, layer 123 may be positioned radially outward of body ply 108 and radially inward of first working ply 114. In still other embodiments, layer 123 may be positioned radially outward of body ply 108 and radially outward of second working ply 116.

Circumferential reinforcement elements 123R are positioned at an angle $\alpha$ from the equatorial plane of $|\alpha| \leq 5$ degrees. In certain embodiments, reinforcement elements 123R are positioned at an angle $\alpha$ of zero degrees i.e., parallel with equatorial plane EP or circumferential direction C. The layer 123 of a plurality of circumferential reinforcing elements 123R may be constructed from at least one extensible or inextensible cord, such as e.g., a metal cord, wound to form a spiral. The cords may be coated with a rubber compound before being laid. The rubber compound then penetrates the cord under the effect of pressure and the temperature when the tire is cured. In one embodiment of the invention, the reinforcing elements are metal reinforcing elements with a secant modulus at 0.7 percent elongation comprised between 10 and 120 GPa and a maximum tangent modulus of less than 150 GPa.

The moduli expressed hereinabove are measured on a curve of tensile stress as a function of elongation determined with a preload of 20 MPa brought down to the cross section of the metal of the reinforcing element, the tensile stress corresponding to a measured tension brought down to the cross section of metal of the reinforcing element. The moduli of the same reinforcing elements can be measured on a curve of tensile stress as a function of elongation determined with a preload of 10 MPa brought down to the overall cross section of the reinforcing element, the tensile stress corresponding to a measured tension brought down to the overall cross section of the reinforcing element. The overall cross section of the reinforcing element is the cross section of a composite element made of metal and of rubber, the latter notably having penetrated the reinforcing element during the tire curing phase.

Circumferential reinforcements 123R may be straight - i.e. linear - or may have a wavy shape along their length. For example, in one exemplary embodiment, the circumferential reinforcement elements 123R include metal reinforcement elements that are wavy and have a ratio $A / \lambda$ of an amplitude $A$ to the wavelength $\lambda$ in the range of $0 < (A / \lambda) \leq 0.09$.

Circumferential reinforcement elements 123R of layer 123 may be divided into discrete zones of different pace, and such zones may be positioned symmetrically about the equatorial plane EP. Each zone may be a single ply or a plurality of plies. For example, in FIG. 1, tire 100 includes 5 zones of varying pace that are positioned symmetrically about equatorial plane EP including a central zone 126, a pair of opposing intermediate zones 128 separated along axial direction A by central zone 126, and a pair of opposing, axially outermost zones 130 separated along axial direction A by central zone 126 and intermediate zones 128.

In one exemplary embodiment, the pace of reinforcement elements 123R in central zone 126 is 1 to 1.5 times the pace of reinforcement elements 123R in axially outermost zones 130, and the pace of the reinforcement elements 123R in opposing intermediate zones 128 is 1.6 to 2 times the pace of reinforcement elements 123R in axially outermost zones 130. In another exemplary embodiment, the pace of the reinforcement elements 123R in opposing intermediate zones 128 is 1.0 to 2 times the pace of reinforcement elements 123R in axially outermost zones 130.

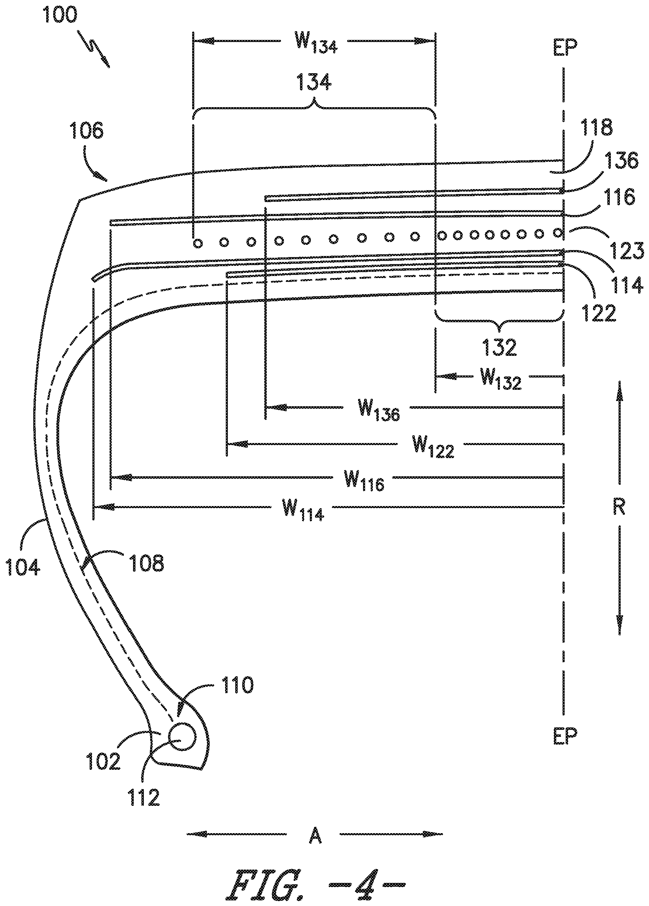

FIG. 4 provides another exemplary embodiment of the present invention similar to the embodiment of FIG. 1. However, in FIG. 4, tire 100 includes a circumferential reinforcement layer 123 having three zones of circumferential reinforcements 123R of varying pace. As before, each zone may be a single ply or a plurality of plies. More particularly, in this embodiment, layer 123 includes a central zone 132 and a pair of opposing lateral zones 134. By way of example, central zone 132 may have reinforcement elements having a pace of 1 to 3 times the pace of reinforcements 134 in lateral zones.

For both embodiments of tire 100 shown in FIGS. 1 and 4, tire 100 can include a protector ply 136 positioned radially outward of both the second working ply 116 and circumferential reinforcing layer 123. Protector ply 136 may be constructed from metal cords. For example, protector ply 136 may include metal cords 136R (FIG. 2) at an angle $\alpha$ of -18 degrees from the equatorial plane EP. Such cords may be constructed as 6.35 metal cords, wherein each cord includes 6 metal wires with each wire being 0.35 mm in diameter.

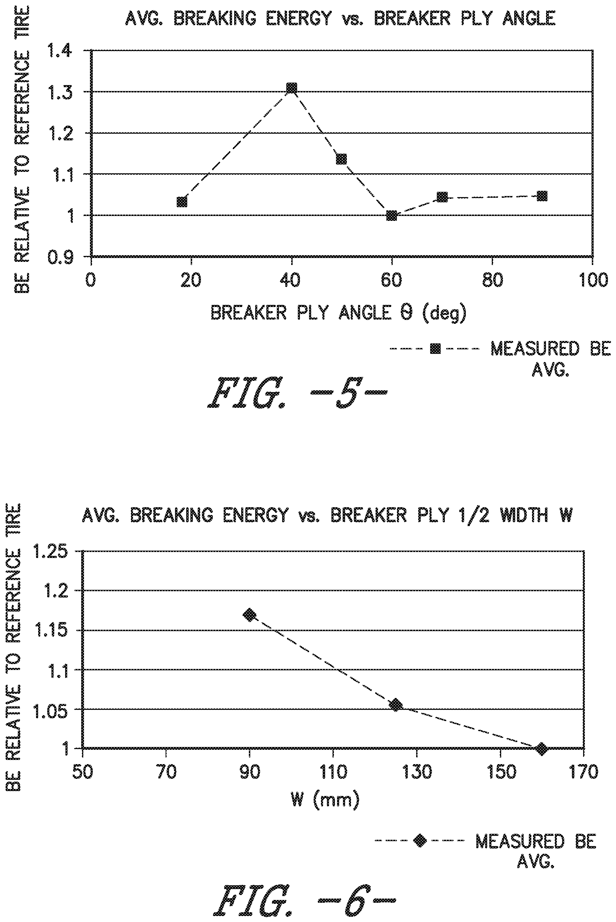

FIG. 5 provides a plot of the measured breaking energy BE of two test tires of nominally identical construction averaged together at each breaker ply angle plotted. The test tires, all of size 445/50R22.5. were of all of nominally identical construction with a breaker ply 122 having reinforcements 122R at different angles $\theta$ from the equatorial plane EP (e.g., FIG. 2) as shown. The working plies and protector ply angles all used a value of angle $\theta = 18°$ and the body ply was at angle $\theta = 90°$. The BE of the reference tire is normalized at 1.0 for comparison purposes. Accordingly, as shown in FIG. 6, the BE measured as described above for the average of test tires surprisingly increased as angles $\theta$ decreased from 60 degrees and showed a peak around 40 degrees.

FIG. 6 is a plot of the BE of the average of test tires relative to the reference tire as a function of ½ the axial width $W_{122}$ of breaker ply 122 and using a breaker ply with angle $\theta = 60°$. As shown in FIG. 6, the BE measured as described above for the average of test tires surprisingly increases as $W_{122}$ decreased from 160 mm to 90 mm.

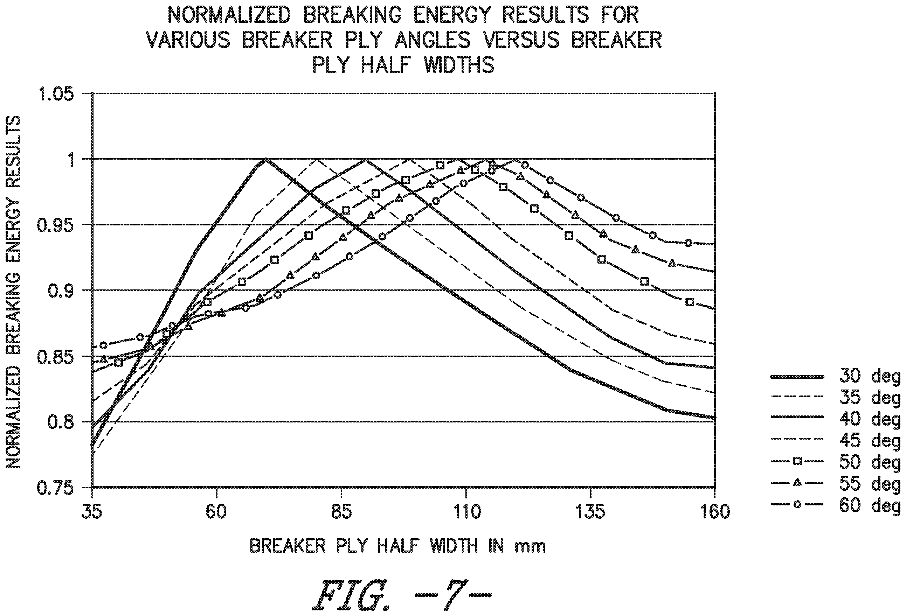

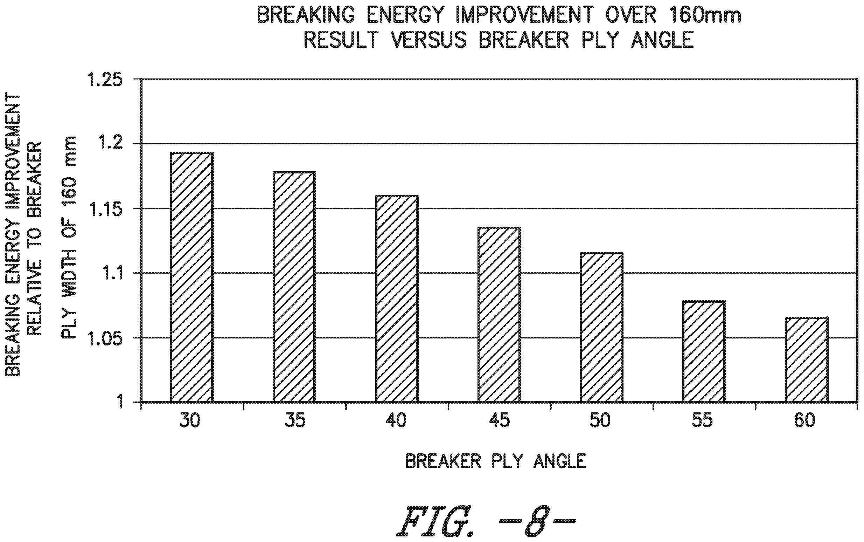

FIGS. 7 and 8 show the result of FEA (finite element analysis) simulations carried out on a production tire of 445/50R22.5 dimension. The construction of the production tire is similar to FIG. 1 with a five zone, zero degree ply and a body ply angle of $\theta = 90°$. However, each zone had the same pace of 2 mm.

FIG. 7 shows the normalized breaking energy as a function of breaker ply angles vs. breaker ply half width $W_{122}$. The optimum for a given angle is thus achieved when the normalized BE is equal to 1. For example, as will be clear to one of ordinary skill in the art using the teachings disclosed herein, an angle $\theta$ of 60° for the reinforcements of the breaker ply offers near-maximum gains in BE gains if the breaker ply half-width $W_{122}$ is reduced to about 65 mm. Such is achieved with considerable gains in mass reduction, improved rolling resistance and other performances.

FIG. 8 shows the normalized BE improvement over a breaker ply half-width $W_{122}$ of 160 mm as a function of angle θ for the breaker ply reinforcements 122R. The maximum BE is seen to increase with decreasing angle θ, a result consistent with θ = 60° having the lowest BE performance of any angle.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

**Claims**

1. A tire (100) defining axial, circumferential, and radial directions, the tire having an equatorial plane (EP), the tire comprising:

   a pair of opposing bead portions (102);
   a pair of opposing sidewall portions (104), each sidewall portion connected with a bead portion;
   a crown portion (106) connected between opposing sidewall portions;
   a body ply (108) extending between the bead portions and through the opposing sidewall portions and crown portion;
   a breaker ply (122) positioned in the crown portion and radially outward of the body ply;
   a first working ply (114) positioned in the crown portion and radially outward of the breaker ply; and
   a second working ply (116) positioned in the crown portion and radially outward of the first working ply;
   a layer (123) of circumferential reinforcement elements (123R) positioned in the crown layer;
   wherein the breaker ply has an axial width and comprises a plurality of breaker ply reinforcement elements (122R) that each extends continuously across the entire axial width of the breaker ply and have a length L of no more than 155 mm, at an angle θ from the equatorial plane, wherein the range of θ is 5° ≤ θ ≤ 60°,
   **characterized in that** the circumferential reinforcement elements are divided along the axial direction into a plurality of discrete zones of varying pace.

2. The tire of claim 1, wherein the range of θ is 35° ≤ θ ≤ 60°.

3. The tire of claim 1, wherein the range of θ is 40° ≤ θ ≤ 60°.

4. The tire of claim 1, wherein θ is 40°.

5. The tire of any of the preceding claims, wherein the breaker ply has a width, W, along the axial direction of $W_{122} \leq L_{max}^* (\sin(\theta))$, where $L_{max}$= 155 mm is the maximum length of the breaker ply reinforcement elements.

6. The tire of any of the preceding claims, wherein the first working ply comprises a plurality of first working ply reinforcement elements (114R) making angles α in the range of 10° ≤ |α| ≤ 45° with the equatorial plane.

7. The tire of claim 6, wherein the second working ply comprises a plurality of second working ply reinforcement elements (116R) making angles α in the range of 10° ≤ |α| ≤ 45° with the equatorial plane and arranged to cross the first working ply reinforcement elements at an opposite angle α from the equatorial plane.

8. The tire of claims 1 to 7, wherein a pace distribution amongst the plurality of discrete zones is symmetrical about the equatorial plane of the tire.

9. The tire of claims 1 to 8, wherein the layer of circumferential reinforcement elements is positioned radially inward of the first working ply.

10. The tire of claims 1 to 8, wherein the layer of circumferential reinforcement elements is positioned radially outward of the second working ply.

11. The tire of claims 1 to 8, wherein the layer of circumferential reinforcement elements is positioned along the radial direction between the first working ply and the second working ply.

12. The tire of claims 1 to 8, wherein the layer of circumferential reinforcement elements positioned in the crown layer comprises three zones of varying pace including a central zone and a pair of opposing lateral zones separated by the central zone.

13. The tire of claim 12, wherein the pace of the circumferential reinforcement elements in the central zone is 1 to 3 times the pace of the circumferential reinforcements in the opposing lateral zones.

14. The tire of claims 1 to 8, wherein the layer of circumferential reinforcement elements positioned in the crown layer comprises five zones of varying pace including a central zone (126), a pair of opposing intermediate zones (128) separated by the central zone, and a pair of axially outermost zones (130) separated by the central zone and the opposing intermediate zones.

**Patentansprüche**

1. Reifen (100), der Axial-, Umfangs- und Radialrichtungen definiert, wobei der Reifen eine Äquatorialebene (EP) aufweist und der Reifen umfasst:

    ein Paar gegenüberliegender Wulstteile (102);
    ein Paar gegenüberliegender Seitenwandabschnitte (104), wobei jeder Seitenwandabschnitt mit einem Wulstabschnitt verbunden ist;
    einen Kronenabschnitt (106), der zwischen gegenüberliegenden Seitenwandabschnitten verbunden ist;
    eine Körperlage (108), die sich zwischen den Wulstabschnitten und durch die gegenüberliegenden Seitenwandabschnitte und den Kronenabschnitt erstreckt;
    eine Brecherlage (122), die im Kronenabschnitt und radial außerhalb der Körperlage angeordnet ist;
    eine erste Arbeitslage (114), die im Kronenbereich und radial außerhalb der Brecherlage angeordnet ist; und
    eine zweite Arbeitslage (116), die im Kronenabschnitt und radial außerhalb der ersten Arbeitslage angeordnet ist;
    eine Lage (123) von umlaufenden Bewehrungselementen (123R), die in der Kronenlage angeordnet sind;
    wobei die Brecherlage eine axiale Breite hat und eine Vielzahl von Brecherlagen-Verstärkungselementen (122R) umfasst, die sich jeweils kontinuierlich über die gesamte axiale Breite der Brecherlage erstrecken und eine Länge L von nicht mehr als 155 mm haben, unter einem Winkel $\theta$ gegenüber der Äquatorialebene, wobei der Bereich von $\theta$ 5° $\leq \theta \leq$ 60° beträgt,
    **dadurch gekennzeichnet, dass** die umlaufenden Verstärkungselemente entlang der axialen Richtung in eine Vielzahl von diskreten Zonen mit unterschiedlicher Geschwindigkeit unterteilt sind.

2. Reifen nach Anspruch 1, wobei der Bereich von $\theta$ 35° $\leq \theta \leq$ 60° beträgt.

3. Reifen nach Anspruch 1, wobei der Bereich von $\theta$ 40° $\leq \theta \leq$ 60° beträgt.

4. Reifen nach Anspruch 1, wobei $\theta$ 40° ist.

5. Reifen nach einem der vorhergehenden Ansprüche, wobei die Brecherlage eine Breite W entlang der axialen Richtung von $W_{122} \leq L_{max}^{*} (\sin (\theta))$ aufweist, wobei $L_{max}$ = 155 mm die maximale Länge der Verstärkungselemente der Brecherlage ist.

6. Reifen nach einem der vorhergehenden Ansprüche, wobei die erste Arbeitslage eine Vielzahl von Verstärkungselementen der ersten Arbeitslage (114R) umfasst, die Winkel $\alpha$ im Bereich von 10° $\leq |\alpha| \leq$ 45° zur Äquatorialebene bilden.

7. Reifen nach Anspruch 6, wobei die zweite Arbeitslage eine Vielzahl von Verstärkungselementen (116R) der zweiten Arbeitslage umfasst, die Winkel $\alpha$ im Bereich von 10° $\leq |\alpha| \leq$ 45° zur äquatorialen Ebene bilden und so ausgelegt sind, dass sie die Verstärkungselemente der ersten Arbeitslage in einem entgegengesetzten Winkel $\alpha$ zur äquatorialen Ebene kreuzen.

8. Reifen nach Anspruch 1 bis 7, wobei eine Geschwindigkeitsverteilung unter der Vielzahl von diskreten Zonen symmetrisch zur Äquatorialebene des Reifens ist.

9. Reifen nach Anspruch 1 bis 8, bei dem die Lage der umlaufenden Verstärkungselemente radial innerhalb der ersten Arbeitslage angeordnet ist.

10. Reifen nach Anspruch 1 bis 8, bei dem die Lage der umlaufenden Verstärkungselemente radial außerhalb der zweiten Arbeitslage angeordnet ist.

11. Reifen nach Anspruch 1 bis 8, wobei die Lage der umlaufenden Verstärkungselemente entlang der radialen Richtung zwischen der ersten Arbeitslage und der zweiten Arbeitslage angeordnet ist.

12. Reifen nach Anspruch 1 bis 8, wobei die Lage der umlaufenden Verstärkungselemente, die in der Kronenschicht angeordnet sind, drei Zonen unterschiedlicher Geschwindigkeiten umfasst, die eine zentrale Zone und ein Paar von gegenüberliegenden lateralen Zonen umfassen, die durch die zentrale Zone getrennt sind.

13. Reifen nach Anspruch 12, wobei das Lauftempo der umlaufenden Verstärkungselemente in der mittleren Zone das 1- bis 3-fache des Lauftempos der umlaufenden Verstärkungen in den gegenüberliegenden seitlichen Zonen beträgt.

14. Reifen nach Anspruch 1 bis 8, wobei die Lage der umlaufenden Verstärkungselemente, die in der Kronenschicht angeordnet sind, fünf Zonen unterschiedlicher Geschwindigkeit umfasst, einschließlich einer Mittelzone (126), einem Paar von gegenüberliegenden Zwischenzonen (128), die durch die Mittelzone getrennt sind, und einem Paar von axial äußeren Zonen (130), die durch die Mittelzone und die gegenüberliegenden Zwischenzonen getrennt sind.

## Revendications

1. Pneu (100) définissant des directions axiale, circonférentielle et radiale, le pneu ayant un plan équatorial (EP), le pneu comprenant :

   une paire de portions de talon (102) opposées ;
   une paire de portions de flanc (104) opposées, chaque portion de flanc étant reliée à une portion de talon ;
   une portion de sommet (106) reliée entre des portions de flanc opposées ;
   une nappe de carcasse (108) s'étendant entre les portions de talon et à travers les portions de flanc opposées et la portion de sommet ;
   une nappe d'armature (122) positionnée dans la portion de sommet et radialement vers l'extérieur de la nappe de carcasse ;
   une première nappe de travail (114) positionnée dans la portion de sommet et radialement vers l'extérieur de la nappe d'armature ; et
   une seconde nappe de travail (116) positionnée dans la portion de sommet et radialement vers l'extérieur de la première nappe de travail ;
   une couche (123) d'éléments de renforcement circonférentiels (123R) positionnés dans la couche de sommet ;
   dans lequel la nappe d'armature a une largeur axiale et comprend une pluralité d'éléments de renforcement de nappe d'armature (122R) qui s'étendent chacun continuellement sur toute la largeur axiale de la nappe d'armature et ont une longueur L d'au plus 155 mm, à un angle $\theta$ par rapport au plan équatorial, dans lequel la plage de $\theta$ est $5° \leq \theta \leq 60°$,
   **caractérisé en ce que** les éléments de renforcement circonférentiels sont divisés le long de la direction axiale en une pluralité de zones discrètes de rythme différent.

2. Pneu selon la revendication 1, dans lequel la plage de $\theta$ est $35° \leq \theta \leq 60°$.

3. Pneu selon la revendication 1, dans lequel la plage de $\theta$ est $40° \leq \theta \leq 60°$.

4. Pneu selon la revendication 1, dans lequel $\theta$ est 40°.

5. Pneu selon l'une quelconque des revendications précédentes, dans lequel la nappe d'armature a une largeur, W, le long de la direction axiale de $W_{122} \leq L_{max} * (\sin(\theta))$, où $L_{max} = 155$ mm est la longueur maximale des éléments de renforcement de nappe d'armature.

6. Pneu selon l'une quelconque des revendications précédentes, dans lequel la première nappe de travail comprend une pluralité de premiers éléments de renforcement de nappe de travail (114R) constituant des angles $\alpha$ dans la plage de $10° \leq |\alpha| \leq 45°$ par rapport au plan équatorial.

7. Pneu selon la revendication 6, dans lequel la seconde nappe de travail comprend une pluralité de seconds éléments de renforcement de nappe de travail (116R) constituant des angles $\alpha$ dans la plage de $10° \leq |\alpha| \leq 45°$ par rapport au plan équatorial et agencés pour croiser les premiers éléments de renforcement de nappe de travail à un angle $\alpha$ opposé par rapport au plan équatorial.

8. Pneu selon les revendications 1 à 7, dans lequel une répartition de rythme parmi la pluralité de zones discrètes est symétrique par rapport au plan équatorial du pneu.

9. Pneu selon les revendications 1 à 8, dans lequel la couche d'éléments de renforcement circonférentiels est positionnée radialement vers l'intérieur de la première nappe de travail.

10. Pneu selon les revendications 1 à 8, dans lequel la couche d'éléments de renforcement circonférentiels est positionnée radialement vers l'extérieur de la seconde nappe de travail.

11. Pneu selon les revendications 1 à 8, dans lequel la couche d'éléments de renforcement circonférentiels est positionnée le long de la direction radiale entre la première nappe de travail et la seconde nappe de travail.

12. Pneu selon les revendications 1 à 8, dans lequel la couche d'éléments de renforcement circonférentiels positionnés dans la couche de sommet comprend trois zones de rythme différent incluant une zone centrale et une paire de zones latérales opposées séparées par la zone centrale.

13. Pneu selon la revendication 12, dans lequel le rythme des éléments de renforcement circonférentiels dans la zone centrale est 1 à 3 fois le rythme des éléments de renforcement circonférentiels dans les zones latérales opposées.

14. Pneu selon les revendications 1 à 8, dans lequel la couche d'éléments de renforcement circonférentiels positionnés dans la couche de sommet comprend cinq zones de rythme différent incluant une zone centrale (126), une paire de zones intermédiaires opposées (128) séparées par la zone centrale, et une paire de zones axialement le plus à l'extérieur (130) séparées par la zone centrale et les zones intermédiaires opposées.

FIG. -1-

FIG. −2−

FIG. -3-

FIG. —4—

FIG. -5-

FIG. -6-

NORMALIZED BREAKING ENERGY RESULTS FOR VARIOUS BREAKER PLY ANGLES VERSUS BREAKER PLY HALF WIDTHS

FIG. -7-

BREAKING ENERGY IMPROVEMENT OVER 160mm
RESULT VERSUS BREAKER PLY ANGLE

FIG. -8-

EP 3 390 106 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15065968 W

- JP 2008201147 A